# EUROPEAN PATENT APPLICATION

(11) **EP 4 844 821 A1**
(43) Date of publication of application: **25.11.2026**
(21) Application number: 26177154.7
(22) Date of filing: 07.05.2026
(51) Int. Cl.: H01M 4/131, H01M 4/62, H01M 4/525, H01M 10/0525, H01M 10/0562

(54) **POSITIVE ELECTRODE STACK, SOLID-STATE BATTERY AND METHOD FOR PRODUCING SOLID-STATE BATTERY**

(30) Priority: 22.05.2025 JP 2025085488
(71) Applicant: Toyota Jidosha Kabushiki Kaisha, Toyota-shi, Aichi-ken 471-8571 (JP)
(72) Inventor: KAWAGUCHI, Yusuke, Aichi-ken, 471-8571 (JP)
(74) Representative: D Young & Co LLP

(57) **Abstract**

The present disclosure provides a positive electrode stack having high adhesiveness with solid electrolyte layers, and low electrical resistance. A positive electrode stack 100 has a positive electrode active material layer 120 laminated on a positive electrode collector layer 110, wherein the positive electrode active material layer 120 has a nickel-containing positive electrode active material 121 and a sulfide solid electrolyte 122, and when the surface A of the positive electrode active material layer 120 not in contact with the positive electrode collector layer 110 is subjected to elemental analysis by energy dispersive X-ray spectroscopy using a scanning electron microscope, the mass ratio (S/Ni) of sulfur atoms to nickel atoms is 0.50 to 0.90.

## Description

### FIELD

The present disclosure relates to a positive electrode stack, a solid-state battery and a method for producing a solid-state battery.

### BACKGROUND

Solid-state batteries are secondary batteries comprising a solid electrolyte as the electrolyte, and they are of interest because of their high performance in terms of charge performance, compared to liquid batteries which use only a liquid electrolyte as the electrolyte. A solid-state battery is usually composed of a positive electrode stack, a solid electrolyte layer and a negative electrode stack layered in that order, and various layering methods have been disclosed for increasing quality.

PTL 1 discloses a method for producing a battery that comprises a step of pressing the layer, from among the positive electrode layer and negative electrode layer, which has the narrower area on the plane perpendicular to the stacking direction, at a first pressing pressure, a step of pressing the other layer, from among positive electrode layer and negative electrode layer, which has the wider area on the plane perpendicular to the stacking direction, at a second pressing pressure, an electrolyte placement step in which the electrolyte layer is placed on the surface of the other layer while the one layer is placed so that the electrolyte layer is sandwiched between the one layer and the other layer, and a final pressing step in which the positive electrode layer, the electrolyte layer and the negative electrode layer are pressed at a third pressing pressure that is lower than the second pressing pressure. The disclosure of PTL 1 aims to provide a method for producing a battery with a suppressed level of crack generation.

### [Citation List]

### [Patent Literature]

[PTL 1] Japanese Unexamined Patent Publication No. 2014-207104

### SUMMARY

When stacking a solid electrolyte layer on a positive electrode stack in a process for producing a solid-state battery, it is known that stacking defects can be reduced by providing an adhesive layer between the positive electrode stack and the solid electrolyte to increase adhesiveness. However, since the adhesive layer creates electrical resistance without contributing to charge-discharge reaction of the solid-state battery, it adversely affects the charge-discharge performance of the solid-state battery.

It is therefore an object of the present disclosure to provide a positive electrode stack having high adhesiveness with solid electrolyte layers, and low electrical resistance.

### [Means for Solving the Problems]

The present disclosure achieves the object described above by the following means.

### <Aspect 1>

A positive electrode stack having a positive electrode active material layer laminated on a positive electrode collector layer, wherein
the positive electrode active material layer has a nickel-containing positive electrode active material and a sulfide solid electrolyte, and
when the surface of the positive electrode active material layer on the side not in contact with the positive electrode collector layer is subjected to elemental analysis by energy dispersive X-ray spectroscopy using a scanning electron microscope, the mass ratio (S/Ni) of sulfur atoms to nickel atoms is 0.50 to 0.90.

### <Aspect 2>

The positive electrode stack according to aspect 1, wherein the mass ratio is 0.60 to 0.80.

### <Aspect 3>

The positive electrode stack according to aspect 1 or 2, wherein the sulfide solid electrolyte is coated onto part of the surface of the positive electrode active material.

### <Aspect 4>

The positive electrode stack according to any one of aspects 1 to 3, wherein the positive electrode active material comprises nickel and cobalt.

### <Aspect 5>

The positive electrode stack according to any one of aspects 1 to 4, wherein
the positive electrode active material layer further has a binder, and
the content of the binder is 0.5 mass% to 1.0 mass% with respect to the positive electrode active material layer.

### <Aspect 6>

A solid-state battery having a positive electrode stack according to any one of aspects 1 to 5, a solid electrolyte layer and a negative electrode stack, in that order.

### <Aspect 7>

The solid-state battery according to aspect 6, wherein the solid electrolyte layer comprises a sulfide solid electrolyte.

### <Aspect 8>

A method for producing a solid-state battery according to aspect 6 or 7, wherein the method comprises stacking the solid electrolyte layer on the positive electrode active material layer of the positive electrode stack.

### [Effect of the Invention]

According to the disclosure it is possible to provide a positive electrode stack having high adhesiveness with solid electrolyte layers, and low electrical resistance.

### BRIEF DESCRIPTION OF DRAWINGS

Fig. 1 is a schematic diagram illustrating a positive electrode stack of the disclosure.
Fig. 2 is a schematic diagram illustrating a solid state battery of the disclosure.

### DESCRIPTION OF EMBODIMENTS

Embodiments of the disclosure will now be explained in detail. The disclosure is not limited to the embodiments described below, however, and various modifications may be implemented which do not depart from the gist thereof.

### <Positive electrode stack>

A positive electrode stack having a positive electrode active material layer laminated on a positive electrode collector layer, wherein
the positive electrode active material layer has a nickel-containing positive electrode active material and a sulfide solid electrolyte, and
when the surface of the positive electrode active material layer on the side not in contact with the positive electrode collector layer is subjected to elemental analysis by energy dispersive X-ray spectroscopy using a scanning electron microscope, the mass ratio (S/Ni) of sulfur atoms to nickel atoms is 0.50 to 0.90.

According to the disclosure it is possible to provide a positive electrode stack having high adhesiveness with solid electrolyte layers, and low electrical resistance.

The present inventors have studied how to increase adhesiveness between the positive electrode stack and the solid electrolyte layer. The present inventors have found that adhesiveness between the positive electrode stack and solid electrolyte layer is increased by exposing the surface of the positive electrode stack on which the solid electrolyte layer is to be stacked (the surface on the side of the positive electrode active material layer not in contact with the positive electrode collector layer) to large amounts of electrode active material. Without being limited to any particular theory, this is believed to be because the electrode active material is hard and has an anchor shape, allowing the electrode active material to readily attach to the solid electrolyte layer. This is attributed to the fact that the electrode active material, and particularly the nickel in the electrode active material, has high affinity for the solid electrolyte, which causes the electrode active material to readily attach to the solid electrolyte layer.

If the surface is exposed to an excessively large amount of electrode active material, however, it is not possible to properly ensure an ion conduction path between the positive electrode active material layer and the solid electrolyte layer, and the electrical resistance of the solid-state battery increases. The present inventors have found that if the degree of exposure of the electrode active material is within a specified range, and specifically if the mass ratio (S/Ni) of sulfur atoms to nickel atoms in the surface is within a specified range as determined by elemental analysis conducted by energy dispersive X-ray spectroscopy using a scanning electron microscope, the adhesiveness between the positive electrode stack and solid electrolyte layer can be increased and it is possible to reduce increase in electrical resistance of the solid-state battery.

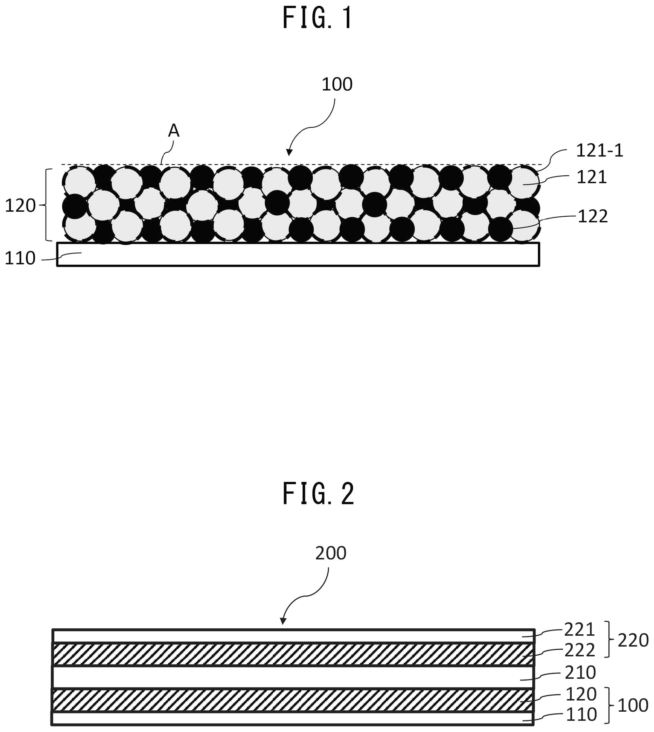

Specifically, as shown in Fig. 1 for example, the positive electrode stack 100 has a positive electrode active material layer 120 stacked on a positive electrode collector layer 110. The positive electrode active material layer 120 has a nickel-containing positive electrode active material 121 and a sulfide solid electrolyte 122. Also, when the surface A on the side of the positive electrode active material layer 120 not in contact with the positive electrode collector layer is subjected to elemental analysis by energy dispersive X-ray spectroscopy using a scanning electron microscope, the mass ratio (S/Ni) of sulfur atoms to nickel atoms is 0.50 to 0.90.

The constituent elements of the invention will now be described.

The positive electrode stack of the disclosure is constructed with a positive electrode active material layer stacked on a positive electrode collector layer.

In elemental analysis of the surface on the side of the positive electrode active material layer not in contact with the positive electrode collector layer by energy dispersive X-ray spectroscopy (EDS) using a scanning electron microscope (SEM), the positive electrode stack of the disclosure has a mass ratio (S/Ni) of sulfur atoms to nickel atoms of 0.50 to 0.90. The mass ratio may be 0.55 or higher, 0.60 or higher, 0.65 or higher or 0.70 or higher, and 0.85 or lower, 0.80 or lower, 0.75 or lower or 0.70 or lower.

The SEM observation scale was 500x. The EDS is measured by cross-section processing of the analyte by ion milling, with an acceleration voltage of 0.5 kV and in mapping mode. The probe current is set high to increase the detection sensitivity.

The mass ratio (S/Ni) of sulfur atoms to nickel atoms can be adjusted by the content of the positive electrode active material and solid electrolyte with respect to the positive electrode active material layer, the particle sizes of the positive electrode active material and solid electrolyte, and the coating film of the sulfide solid electrolyte on at least part of the surface of the positive electrode active material.

### <Positive electrode active material layer>

The positive electrode active material layer has a nickel-containing positive electrode active material and a sulfide solid electrolyte. The positive electrode active material layer may also optionally have a binder and a conductive aid. The positive electrode active material layer may also comprise other additives.

The content of the positive electrode active material is not particularly restricted, and for example, the content may be 40 mass% or greater, 50 mass% or greater or 60 mass% or greater, and 100 mass% or lower or 90 mass% or lower, with respect to the positive electrode active material layer.

The content of the sulfide solid electrolyte is also not particularly restricted, and for example, the content may be 1 mass% or greater, 5 mass% or greater, 10 mass% or greater, 15 mass% or greater or 20 mass% or greater, and 90 mass% or lower, 80 mass% or lower, 70 mass% or lower, 60 mass% or lower or 50 mass% or lower, with respect to the positive electrode active material layer.

The binder content is not particularly restricted, and for example, the content may be 0.5 mass% or greater, 0.6 mass% or greater or 0.7 mass% or greater, and 1.0 mass% or lower, 0.9 mass% or lower or 0.8 mass% or lower, with respect to the positive electrode active material layer. A large binder content increases the adhesiveness between the positive electrode stack and positive electrode collector layer, but also increases the electrical resistance of the solid-state battery.

The conductive aid content is not particularly restricted, and for example, the content may be 0.5 mass% or greater, 1.0 mass% or greater, 3.0 mass% or greater or 5.0 mass% or greater, and 20.0 mass% or lower, 15.0 mass% or lower or 10.0 mass% or lower, with respect to the positive electrode active material layer.

The form of the positive electrode active material layer is not particularly restricted, and it may be an essentially flat sheet-like form, for example. The thickness of the positive electrode active material layer is not particularly restricted and may be 0.1 µm or greater, 1 µm or greater or 10 µm or greater, and 2 mm or smaller, 1 mm or smaller or 500 µm or smaller, for example.

### (Positive electrode active material)

The positive electrode active material comprises nickel. The positive electrode active material may also optionally comprise cobalt, manganese and aluminum. The positive electrode active material occludes and releases lithium ions. Examples of positive electrode active materials include, but are not limited to, lithium nickelate (LiNiO₂), nickel cobalt lithium manganate (NCM: LiCO_{1/3}Ni_{1/3}Mn_{1/3}O₂) and nickel cobalt lithium aluminate (LiNi_{0.8}(CoAl)_{0.2}O₂).

A sulfide solid electrolyte may also be coated onto part of the surface of the positive electrode active material. Specifically, as shown in Fig. 1, for example, a sulfide solid electrolyte coating 121-1 is coated onto part of the surface of the positive electrode active material 121. Depending on the coating amount of the sulfide solid electrolyte, it is possible to easily adjust the mass ratio (S/Ni) of sulfur atoms to nickel atoms on the surface of side of the positive electrode active material layer not in contact with the positive electrode collector layer. The sulfide electrolyte is described below in regard to the sulfide electrolyte.

The method of coating the sulfide solid electrolyte is not particularly restricted, and for example, it may be a method of mixing and treating the positive electrode active material and sulfide solid electrolyte using a Balance Gran. The rotational speed of the Balance Gran is not particularly restricted and may be 2000 min⁻¹ or higher, 2500 min⁻¹ or higher or 3000 min⁻¹ or higher, and 5000 min⁻¹ or lower or 4000 min⁻¹ or lower, for example. The treatment time is not particularly restricted and may be 5 minutes or longer, 6 minutes or longer, 7 minutes or longer, 8 minutes or longer, 9 minutes or longer or 10 minutes or longer, and 30 minutes or less, 25 minutes or less, 20 minutes or less or 15 minutes or less.

The positive electrode active material may also have a coating film of a material other than the sulfide solid electrolyte. The material may be one that exhibits lithium ion conductivity, has low reactivity with the positive electrode active material or solid electrolyte, and can maintain the shape of the covering layer without flowing even when contacting the active material or solid electrolyte. Specific examples of such materials include, but are not limited to, LiNbO₃, Li₄Ti₅O₁₂ and Li₃PO₄.

The form of the positive electrode active material may be any common form used as a positive electrode active material for a battery, without any particular restrictions. The positive electrode active material may be particulate, for example. The positive electrode active material may be primary particles, or secondary particles which are aggregates of multiple primary particles. The particle size of the positive electrode active material may be 1 nm or greater, 5 nm or greater or 10 nm or greater, and 500 µm or smaller, 100 µm or smaller, 50 µm or smaller or 30 µm or smaller, for example. The particle size of the positive electrode active material is the 50% cumulative particle diameter (median diameter) in the volume-based particle size distribution determined by laser diffraction/scattering.

### (Sulfide solid electrolyte)

The particle size of the sulfide solid electrolyte is not particularly restricted and may be 1 nm or larger, 5 nm or larger or 10 nm or larger, and 500 µm or smaller, 100 µm or smaller, 50 µm or smaller or 30 µm or smaller, for example. The particle size of the sulfide solid electrolyte is the 50% cumulative particle diameter (median diameter) in the volume-based particle size distribution determined by laser diffraction/scattering.

Examples of sulfide solid electrolytes include, but are not limited to, sulfide-based amorphous solid electrolytes, sulfide-based crystalline solid electrolytes and argyrodite solid electrolytes. Specific examples of sulfide solid electrolytes include, but are not limited to, Li₂S-P₂S₅ (such as Li₇P₃S₁₁, Li₃PS₄ and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅ and Li₇₋ₓPS₆₋ₓClₓ, as well as combinations thereof.

The sulfide solid electrolyte may be glass or crystallized glass (glass ceramic).

### (Binder)

The material of the binder is not particularly restricted. Examples for the binder include, but are not limited to, materials such as polyvinylidene fluoride (PVdF), butadiene rubber (BR), polytetrafluoroethylene (PTFE), and styrene-butadiene rubber (SBR). The binder is not particularly restricted and may be of a single type alone, or two or more different types may be used in combination.

### (Conductive aid)

The conductive aid is not particularly restricted. The conductive aid may be, but is not limited to, vapor-grown carbon fiber (VGCF), acetylene black (AB), Ketjen black (KB), carbon nanotubes (CNT) or carbon nanofibers (CNF). The conductive aid may be particulate or filamentous, for example, and its size is not particularly restricted. The conductive aid is not particularly restricted and may be of a single type alone, or two or more different types may be used in combination.

### <Positive electrode collector layer>

The material used in the positive electrode collector layer is not particularly restricted, and any one commonly used as a positive electrode collector in a solid-state battery may be employed as appropriate. The material used in the positive electrode collector layer may be Cu, Ni, Cr, Au, Pt, Ag, Al, Fe, Ti, Zn, Co or stainless steel, for example, with no limitation to these. The positive electrode collector layer may also have a coating layer on the surface, in order to adjust the resistance. The positive electrode collector layer may also have the aforementioned metal either plated or vapor deposited on a metal foil or substrate.

The form of the positive electrode collector layer is not particularly restricted and may be, for example, a foil, sheet, mesh or the like. A foil is preferred among these. The thickness of the positive electrode collector layer is not particularly restricted, and may be 0.1 µm or greater or 1 µm or greater, and 1 mm or smaller or 100 µm or smaller, for example.

The positive electrode stack can be produced by a publicly known method. For example, it can be produced by molding a mixture comprising the components for the positive electrode active material layer in a dry or wet system onto the positive electrode collector layer.

### <Solid-state battery>

The solid-state battery of the disclosure has a positive electrode stack, a solid electrolyte layer and a negative electrode stack of the disclosure, in that order.

According to the disclosure it is possible to provide a solid-state battery having high adhesiveness between the positive electrode stack and the solid electrolyte layer, and low electrical resistance.

Specifically, as shown in Fig. 2, for example, the solid-state battery 200 has a positive electrode stack 100, a solid electrolyte layer 210 and a negative electrode stack 220 stacked in that order. The negative electrode stack 220 is constructed with a negative electrode active material layer 222 stacked on a negative electrode collector layer 221.

The solid-state battery of the disclosure has a positive electrode stack, a solid electrolyte layer and a negative electrode stack according to the disclosure, in that order. The solid-state battery may also optionally comprise a liquid electrolyte. The positive electrode stack here may be understood by referring to the positive electrode stack described above.

The term "solid-state battery" as used herein refers to any battery which uses at least a solid electrolyte as the electrolyte, and therefore the solid-state battery may also employ a combination of a solid electrolyte and a liquid electrolyte as the electrolyte. Alternatively, the "solid-state battery" referred to herein may be an all-solid-state battery, i.e. a battery employing only a solid electrolyte as the electrolyte.

### <Solid electrolyte layer>

The solid electrolyte layer comprises at least a solid electrolyte, and may also optionally comprise a binder. The solid electrolyte layer may also contain various other additives. The binder here may be understood by referring to the positive electrode stack described above.

The solid electrolyte is not particularly restricted and may be a sulfide solid electrolyte. The solid electrolyte may be an oxide solid electrolyte, or polymer electrolyte particles, for example.

Examples of oxide solid electrolytes include, but are not limited to, Li₇La₃Zr₂O₁₂, Li₇₋ₓLa3Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊xAlₓGe₂₋ₓ(PO₄)₃, Li₃PO₄ and Li₃₊ₓPO₄₋ₓNₓ(LiPON), as well as their combinations.

The oxide solid electrolyte may be glass or crystallized glass (glass ceramic).

Polymer electrolyte particles include, but are not limited to, polyethylene oxide (PEO) and polypropylene oxide (PPO), and their copolymers.

The solid electrolyte layer can be produced by a publicly known method. For example, it can be produced by molding a mixture comprising the components for the solid electrolyte layer in a dry or wet system onto a substrate.

### <Negative electrode stack>

The negative electrode stack may have a negative electrode active material layer and a negative electrode collector layer.

### (Negative electrode active material layer)

The negative electrode active material layer comprises at least a negative electrode active material and a solid electrolyte, and may also optionally comprise a binder and a conductive aid. The negative electrode active material layer may also comprise other additives. The solid electrolyte may be understood by referring to the solid electrolyte layer described above, and the binder and conductive aid may be understood by referring to the positive electrode stack described above.

The contents of the negative electrode active material, solid electrolyte and conductive aid in the negative electrode active material layer may be determined as appropriate for the desired battery performance. For example, the content of the negative electrode active material may be 40 mass% or greater, 50 mass% or greater or 60 mass% or greater, and 100 mass% or lower or 90 mass% or lower, with respect to 100 mass% as the total negative electrode active material layer (solid content).

The form of the negative electrode active material layer is not particularly restricted, and it may be an essentially flat sheet-like form, for example. The thickness of the negative electrode active material layer is not particularly restricted and may be 0.1 µm or greater, 1 µm or greater or 10 µm or greater, and 2 mm or smaller, 1 mm or smaller or 500 µm or smaller, for example.

The negative electrode active material used may be any of various substances whose potential for storing and releasing lithium ions (charge-discharge potential) is electronegative potential compared to the positive electrode active material of the disclosure. The material for the negative electrode active material is not particularly restricted, and it may be lithium metal, or any material capable of occluding and releasing metal ions such as lithium ions. Examples of materials capable of occluding and releasing metal ions such as lithium ions include, but are not limited to, alloy-based negative electrode active materials and carbon materials, or lithium titanate (Li₄Ti₅O₁₂).

Alloy-based negative electrode active materials are not particularly restricted, and examples include Si alloy-based negative electrode active materials and Sn alloy-based negative electrode active materials. Si alloy-based negative electrode active materials include silicon, silicon oxides, silicon carbides, silicon nitrides, and their solid solutions. A Si alloy-based negative electrode active material may also include metal elements other than silicon, such as Fe, Co, Sb, Bi, Pb, Ni, Cu, Zn, Ge, In, Sn and Ti, for example. Sn alloy-based negative electrode active materials include tin, tin oxide and tin nitride, as well as their solid solutions. A Sn alloy-based negative electrode active material may also include metal elements other than tin, such as Fe, Co, Sb, Bi, Pb, Ni, Cu, Zn, Ge, In, Ti and Si, for example.

Carbon materials are not particularly restricted and include hard carbon, soft carbon and graphite, for example.

The form of the negative electrode active material is not particularly restricted and may be any common form used as a negative electrode active material for a battery. The negative electrode active material may be particulate or in a sheet form, for example.

### (Negative electrode collector layer)

The material used in the negative electrode collector layer is not particularly restricted, and any one commonly used as a negative electrode collector in a solid-state battery may be employed as appropriate. The material used in the negative electrode collector layer may be Cu, Ni, Cr, Au, Pt, Ag, Al, Fe, Ti, Zn, Co, stainless steel or a carbon sheet, with no limitation to these. The negative electrode collector layer may also have a coating layer on the surface, in order to adjust the resistance.

The form of the negative electrode collector layer is not particularly restricted and may be, for example, a foil, sheet or mesh. A foil is preferred among these. The thickness of the negative electrode collector layer is not particularly restricted, and may be 0.1 µm or greater or 1 µm or greater, and 1 mm or smaller or 100 µm or smaller, for example.

The negative electrode stack can be produced by a publicly known method. For example, it can be produced by molding a mixture comprising the components for the negative electrode active material layer in a dry or wet system onto the negative electrode collector layer.

### <Liquid electrolyte>

The liquid electrolyte is not particularly restricted, but it preferably contains a supporting electrolyte and a solvent.

There are no particular restrictions on the supporting electrolyte (lithium salt) in the electrolyte solution which has lithium ion conductivity, and inorganic lithium salts and organic lithium salts may be mentioned. Examples of inorganic lithium salts include, but are not limited to, LiPF₆, LiBF₄, LiClO₄ and LiAsF₆. Examples of organic lithium salts include, but are not limited to, LiCF₃SO₃, LiN(CF₃SO₂)₂, LiN(C₂F₅SO₂)₂, LiN(FSO₂)₂, LiC(CF₃SO₂)₃.

The solvent used in the electrolyte solution is also not particularly restricted, and may be a cyclic carbonate or straight-chain carbonate, for example. Examples of cyclic carbonates include, but are not limited to, ethylene carbonate (EC), propylene carbonate (PC) and butylene carbonate (BC). Examples of straight-chain carbonates include, but are not limited to, dimethyl carbonate (DMC), diethyl carbonate (DEC) and ethylmethyl carbonate (EMC). The electrolyte solution is not particularly restricted and may be of a single type alone, or two or more different types may be used in combination.

### <Method for producing solid-state battery>

The method for producing a solid-state battery of the disclosure comprises stacking a solid electrolyte layer on the positive electrode active material layer of the positive electrode stack.

According to the disclosure it is possible to provide a method for producing a solid-state battery having high adhesiveness between the positive electrode stack and the solid electrolyte layer, and low electrical resistance.

The method for producing a solid-state battery of the disclosure comprises stacking a solid electrolyte layer on the positive electrode active material layer of the positive electrode stack. The solid-state battery and solid electrolyte layer may be understood by referring to the solid-state battery described above, and the positive electrode stack and positive electrode active material layer may be understood by referring to the positive electrode stack described above.

The method of laminating the solid electrolyte layer is not particularly restricted and may be a transfer, contact bonding or slurry coating method, for example, with a transfer method being particularly preferred from the viewpoint of increasing adhesiveness between the positive electrode stack and the solid electrolyte layer.

The transfer method may be carried out using a roll press. The pressing pressure is not particularly restricted and may be 0.5 t/cm or higher, 1.0 t/cm or higher, 1.5 t/cm or higher or 2.0 t/cm or higher, and 5.0 t/cm or lower, 4.0 t/cm or lower or 3.0 t/cm or lower, for example. The pressing temperature is also not particularly restricted and may be 50°C or higher, 60°C or higher, 70°C or higher or 80°C or higher, and 150°C or lower, 120°C or lower or 100°C or lower, for example.

The method for producing a solid-state battery of the disclosure may also comprise layering a negative electrode stack on the surface of the side of the solid electrolyte layer where the positive electrode stack is not layered.

The method of layering the negative electrode stack is not particularly restricted, and for example, it may be a method in which the negative electrode stack is overlayed and pressed on the surface of the side of the solid electrolyte layer where the positive electrode stack is not layered. The pressing pressure is not particularly restricted and may be 1 t/cm² or higher, 2 t/cm² or higher, 3 t/cm² or higher or 5 t/cm² or higher, and 20 t/cm² or lower, 15 t/cm² or lower or 10 t/cm² or lower, for example.

Other steps for production of a solid-state battery may be carried out by applying publicly known methods.

### [Examples]

The present disclosure will now be explained in more specific detail through the following Examples and Comparative Examples, which are not intended to limit the disclosure in any way.

### <Fabrication of solid-state battery>

### <Positive electrode stack>

After loading 500 g of LiNiₓCo_{y}Al_{z}O₂ (NCA) as a positive electrode active material precursor and 45 g of a Li₂S-P₂S₅-based glass ceramic (D50 = 0.8 µm) containing LiI as a sulfide solid electrolyte into a Balance Gran (product of Freund Corp.), they were mixed at 3,000 min⁻¹ for the treatment times listed in Table 1, and part of the surface of the positive electrode active material precursor was coated with a sulfide solid electrolyte to obtain positive electrode active materials for Examples 1 to 4 and Comparative Examples 1 to 4.

Next, the positive electrode active materials of Examples 1 to 4 and Comparative Examples 1 to 4, and a Li₂S-P₂S₅-based glass ceramic (D50 = 0.8 µm) containing LiI as a solid electrolyte, were weighed out so that the volume ratio of the positive electrode active material and solid electrolyte was 75:25. These were then loaded into a FILMIX apparatus (30-L, product of Primix Corp.) together with carbon nanotubes (CNT) as a conductive aid, styrene-butadiene rubber as a binder and tetralin as a solvent, and the mixture was kneaded at 25 m/s for 20 minutes to obtain a positive electrode mixture slurry. The positive electrode mixture slurry was coated as a positive electrode collector layer onto an aluminum foil and dried at 100°C for 30 minutes. It was then punched to a size of 1 cm² and pressed at 175°C with a pressing pressure of 5 t/cm to fabricate positive electrode stacks for Examples 1 to 4 and Comparative Examples 1 to 4. The contents of the binder in the positive electrode active material layer (mass ratios with respect to the electrode active material layer) are shown in Table 1.

The positive electrode stacks of Examples 1 to 4 and Comparative Examples 1 to 4 were each subjected to elemental analysis by energy dispersive X-ray spectroscopy using a scanning electron microscope, on the surface of the positive electrode active material layer on the side not in contact with the positive electrode collector layer, and the mass ratio (S/Ni) of sulfur atoms to nickel atoms was measured. The results are shown in Table 1. S/Ni was measured using a scanning electron microscope (SU8030, product of Hitachi High-Technologies Corp.), an energy dispersive X-ray spectrometer and their bundled software, quantifying the mass for both S and Ni at 500x scale and calculating the mass ratio.

### <Solid electrolyte layer>

After loading a Li₂S-P₂S₅-based glass ceramic (D50 = 0.8 µm) containing LiI as the solid electrolyte, butadiene rubber as the binder and tetralin as the solvent into a FILMIX apparatus (30-L, product of Primix Corp.), the mixture was kneaded with a circumferential speed of 20 m/s and a dispersion time of 10 minutes to prepare a solid electrolyte slurry. The solid electrolyte slurry was then coated onto an aluminum foil and dried at 100°C for 30 minutes to form a solid electrolyte layer.

### <Negative electrode stack>

A Li₂S-P₂S₅-based glass ceramic (D50 = 0.8 µm) containing LiI as a solid electrolyte, vapor-grown carbon fiber (VGCF) as a conductive aid, butadiene rubber as a binder and heptane as a solvent was loaded into the kneading vessel of a FILMIX apparatus (30-L, product of Primix Corp.), and the mixture was stirred at 20,000 rpm for 30 minutes. Next, Li₄Ti₅O₁₂ particles (D50 = 1 µm) as a negative electrode active material were loaded into the kneading vessel to a solid electrolyte volume ratio of 70:30, and the mixture was stirred at 15,000 rpm for 60 minutes to prepare a negative electrode mixture slurry. The prepared negative electrode mixture slurry was coated onto a copper foil as a negative electrode collector layer and dried at 100°C for 30 minutes. It was then punched out to a size of 1 cm² to obtain a negative electrode stack.

### <Layering of positive electrode stack, solid electrolyte layer and negative electrode stack>

The electrode active material layer surfaces of the positive electrode stacks of Examples 1 to 4 and Comparative Examples 1 to 4 were attached to solid electrolyte layer surfaces and passed through a roll press at 90°C with a pressing pressure of 2 t/cm, after which the aluminum foil on the solid electrolyte layer side was peeled off, transferring the solid electrolyte layer onto the electrode active material layer surface.

The negative electrode active material layer surface of a negative electrode stack was overlaid on the surface of the side of the solid electrolyte layer where the positive electrode stack was not layered, and was pressed at room temperature for 1 minute at 6 ton/cm². Finally, a stainless steel bar was placed in the positive electrode stack and negative electrode stack, and each was constrained with 1 ton to obtain solid-state batteries for Examples 1 to 4 and Comparative Examples 1 to 4.

### <Evaluation>

### <Adhesiveness evaluation>

For each of the positive electrode stacks of Examples 1 to 4 and Comparative Examples 1 to 4, a photograph was taken of the transfer surface at the stage where the solid electrolyte layer had been transferred onto the electrode active material layer surface, and the area of the transferred solid electrolyte layer and the area of the transfer surface were measured using image analysis software (ImageJ, product of U.S. National Institutes of Health). The transfer rate was calculated using:
Transfer rate = [area of transferred solid electrolyte]/[area of transfer surface]. The results are shown in Table 1.

### <Evaluation of electrical resistance>

Each of the solid-state batteries of Examples 1 to 4 and Comparative Examples 1 to 4 was subjected to two cycles of constant-current/constant-voltage charge and discharge at a set voltage of 2.8 V or 1.5 V and a rate of 1/3C, and then adjusted to 40% SOC at a rate of 1/3C. Discharge was carried out with a direct current corresponding to a 2.5C rate in a thermostatic bath kept at 25°C, and the resistance value was calculated from the voltage drop rate and applied current after 5 seconds with respect to 0 seconds.

### [Table 1]

**Table 1**

| | Positive electrode active material layer | | Positive electrode stack | Evaluation | |
|---|---|---|---|---|---|
| | Positive electrode active material | Binder | S/Ni(-) | Transfer rate (%) | Solid-state battery electrical resistance (Ω) |
| | Covering treatment time (min) | Content (mass%) | | | |
| Comp. Example 1 | 0 | 0.6 | 0.30 | 100.00 | 18.27 |
| Comp. Example 2 | 5 | 0.6 | 0.33 | 100.00 | - |
| Example 1 | 5 | 0.7 | 0.55 | 100.00 | 11.10 |
| Example 2 | 5 | 0.8 | 0.62 | 100.00 | 9.31 |
| Example 3 | 5 | 0.9 | 0.79 | 100.00 | - |
| Example 4 | 10 | 0.6 | 0.83 | 97.11 | 9.37 |
| Comp. Example 3 | 20 | 0.6 | 1.10 | 61.73 | 9.31 |
| Comp. Example 4 | 80 | 0.6 | 1.27 | 49.63 | 9.31 |

Based on Examples 1 to 4 and Comparative Examples 1 to 4, when the mass ratio (S/Ni) of sulfur atoms to nickel atoms on the surface on the side of the positive electrode active material layer not in contact with the positive electrode collector layer is lower than a specific value, the transfer rate between the positive electrode stack and solid electrolyte layer is high and the adhesiveness between the positive electrode stack and solid electrolyte layer is high.

Moreover, judging from Examples 1, 2 and 4 and Comparative Examples 1, 3 and 4, it is seen that the electrical resistance of the solid-state battery is low when the S/Ni ratio is higher than a specific value. It can therefore be understood that when S/Ni is a value within a specified range, the positive electrode stack has high adhesiveness with the solid electrolyte layer and low electrical resistance.

### [Reference Signs List]

100 Positive electrode stack
110 Positive electrode collector layer
120 Positive electrode active material layer
121 Positive electrode active material
121-1 Sulfide solid electrolyte coating film
122 Sulfide solid electrolyte
200 Solid-state battery
210 Solid electrolyte layer
220 Negative electrode stack
221 Negative electrode collector layer
222 Negative electrode active material layer

## Claims

1. A positive electrode stack having a positive electrode active material layer laminated on a positive electrode collector layer, wherein
the positive electrode active material layer has a nickel-containing positive electrode active material and a sulfide solid electrolyte, and
when the surface of the positive electrode active material layer on the side not in contact with the positive electrode collector layer is subjected to elemental analysis by energy dispersive X-ray spectroscopy using a scanning electron microscope, the mass ratio (S/Ni) of sulfur atoms to nickel atoms is 0.50 to 0.90.

2. The positive electrode stack according to claim 1, wherein the mass ratio is 0.60 to 0.80.

3. The positive electrode stack according to claim 1 or 2, wherein the sulfide solid electrolyte is coated onto part of the surface of the positive electrode active material.

4. The positive electrode stack according to any one of claims 1 to 3, wherein the positive electrode active material comprises nickel and cobalt.

5. The positive electrode stack according to any one of claims 1 to 4, wherein
the positive electrode active material layer further has a binder, and
the content of the binder is 0.5 mass% to 1.0 mass% with respect to the positive electrode active material layer.

6. A solid-state battery having a positive electrode stack according to any one of claims 1 to 5, a solid electrolyte layer and a negative electrode stack, in that order.

7. The solid-state battery according to claim 6, wherein the solid electrolyte layer has a sulfide solid electrolyte.

8. A method for producing a solid-state battery according to claim 6 or 7, wherein the method comprises stacking the solid electrolyte layer on the positive electrode active material layer of the positive electrode stack.
